# EUROPEAN PATENT APPLICATION

(11) **EP 4 668 182 A1**
(43) Date of publication of application: **24.12.2025**
(21) Application number: 24183005.8
(22) Date of filing: 19.06.2024
(51) Int. Cl.: G06Q 10/08, G06Q 10/0833, H04W 4/029

(54) **INDIRECT LOCATION OF A TRANSPORTABLE ASSET USING A MOVABLE GEOFENCE**

(71) Applicant: Siemens Aktiengesellschaft, 80333 München (DE)
(72) Inventor: Wamser, Christian, 91341 Röttenbach (DE)
(74) Representative: Siemens Patent Attorneys

(57) **Abstract**

The invention relates to a method for locating a transportable asset (120). To facilitate locating a transportable asset (120) and e.g., to avoid false location, the following steps of a computer-implemented method for locating a transportable asset (120) are suggested:
• providing a movable geofence (122) which is defined in relation to the transportable asset (120);
• activating location tracking of the transportable asset (120) upon entry of a transportation device (124) into the movable geofence (122); and
• determining a location (L-120) of the transportable asset (120) while the transportation device (124) is located inside the movable geofence (122).

## Description

### Technical Field

The present disclosure is directed, in general, to locating a transportable asset, e.g., using real-time locating (RTL) systems. Systems to locate a transportable asset are collectively referred to herein as product systems.

### Background Art

In the last couple of years RTL systems are more and more used to bring transparency into logistics and manufacturing to optimize the processes, e.g. reduce time wasted for searching materials. Sometimes companies require to track a big number of assets in a big area, e.g., a warehouse. This can result in high costs for the RTL system. Further, according to some approaches, locating assets can fail in that wrong locations may be determined so that, e.g., an automation system connected to the locating system may be impaired.

### Summary of Invention

Variously disclosed embodiments include methods, devices, and systems that may be used to facilitate locating a transportable asset.

According to a first aspect of the invention, a computer-implemented method for locating a transportable asset may include:
- providing a movable geofence which is defined in relation to the transportable asset;
- activating location tracking of the transportable asset upon entry of a transportation device into the movable geofence; and
- determining a location of the transportable asset while the transportation device is located inside the movable geofence.

According to a second aspect of the invention, a transportation device for transporting a transportable asset may be equipped with at least one RTL component and with at least one reader of an identification system, wherein the respective reader may be arranged and configured to be activated upon entry of the transportation device into a movable geofence which is defined in relation to the transportable asset.

According to a third aspect, a locating system may be arranged and configured to execute the steps of this computer-implemented method according to the first aspect.

According to a fourth aspect, a computer program product may include computer program code that, when executed by the computer system according to the second aspect, causes the computer system to carry out the method according to the first aspect.

According to a fifth aspect, a computer-readable medium may include the computer program product according to the third aspect. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for locating a transportable asset or for carrying out the same purposes of the present disclosure.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

Embodiments will be described below in greater detail.

### Brief Description of the Drawings

- Figs. 1-5: depict a functional block diagram of example systems that facilitate locating a transportable asset in a product system.
- Fig. 6: depicts a flow diagram of an example methodology that facilitates locating a transportable asset in a product system.
- Fig. 7: depicts a block diagram of a data processing system in which an embodiment can be implemented.

### Detailed Description

Various technologies that pertain to systems and methods for locating a transportable asset in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

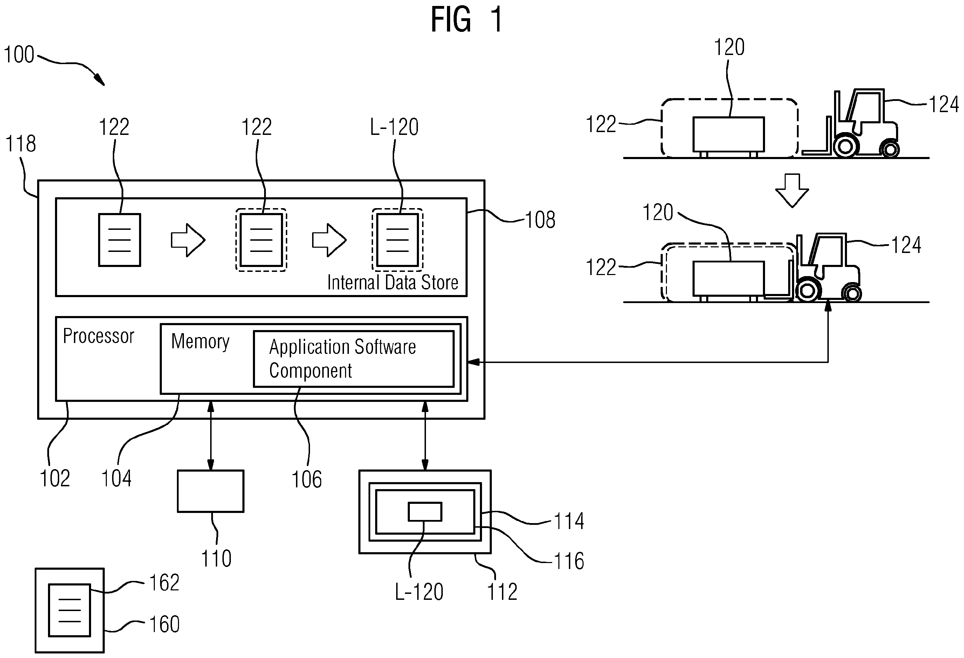

With reference to Fig. 1, a functional block diagram of a first example computer system or data processing system 100 is depicted that facilitates locating a transportable asset 120 in a product system. The processing system 100 may include a locating system 118 which may, in some examples, may include at least one processor 102 that is configured to execute at least one application software component 106 from a memory 104 accessed by the processor 102. The application software component 106 may be configured (i.e., programmed) to cause the processor 102 to carry out various acts and functions described herein. For example, the described application software component 106 may include and/or correspond to one or more components of an application for facilitating locating a transportable asset 120, wherein the application software component 106 may, e.g., be configured to generate and store product data in a data store 108 such as a database.

By way of example, the locating system 118 may be cloud-based, internet-based and/or be operated by a provider providing support for locating a transportable asset 120. By way of example, the locating system 118 may be included in an industrial automation system which may, e.g., further include one or more sensors, actuators, such as an electric motor, a valve or a robot, and inverter supplying an electric motor, a gear box. The automation system may, e.g., further include one or more programmable logic controllers (PLC), communication gateways, and/or other components relating to industrial automation products and industrial automation in general. The automation system may, e.g., be a complex production line or production plant, e.g., a bottle filling machine, conveyor, welding machine, welding robot, etc. Further, by way of example, the automation system may include or be part of an IT system, e.g., a manufacturing operations management (MOM) system, a manufacturing execution system (MES), an enterprise resource planning (ERP) system, a supervisory control and data acquisition (SCADA) system, or any combination thereof. In further examples, the user may be located close to the locating system 118 or remote from the locating system 118, e.g., anywhere else, e.g., using a mobile device for connecting to the locating system 118, e.g., via the internet, wherein the mobile device may include an input device 110 and a display device 112. In some examples, the locating system 118 may be installed and run on a user's device, such as a computer, laptop, pad, on-premises computing facility, or the like.

It should be appreciated that locating a transportable asset 120 may be a challenging and costly process. If a big number of assets in a big area, e.g., a warehouse, need to be tracked, high costs may be involved. Further, according to some approaches, locating assets can fail in that wrong locations may be determined so that, e.g., an automation system connected to the locating system may be impaired.

To enable the enhanced locating a transportable asset 120, the described product system or processing system 100 may include at least one input device 110 and at least one display device 112, such as a display screen. The described processor 102 may be configured to generate a graphical user interface (GUI) 114 through the display device 112. Such a GUI 114 may include GUI elements such as buttons, links, search boxes, lists, text boxes, images, scroll bars usable by a user to provide inputs through the input device 110 that cause locating a transportable asset 120. By way of example, the GUI 114 may include a location user interface (UI) 116 provided to a user.

In an example embodiment, for locating a transportable asset 120, the application software component 106 and/or the processor 102 may be configured to provide a movable geofence 122 which is defined in relation to the transportable asset 120.

By way of example, the transportable asset 120 may include or be a final good, e.g., a manufactured product, or an intermediate good, or a (raw) material. The transportable asset 120 may, e.g., be stored in a warehouse or close to a manufacturing line and, e.g., be one of the prerequisites or the result of a certain manufacturing step, e.g., in an industrial manufacturing plant or factory. In further examples, the transportable asset 120 may include or be a pallet, a box, a container, etc., e.g., for carrying the mentioned goods or materials.

Locating the transportable asset 120 may, e.g., be done using a locating system 118, wherein the location of the transportable asset 120 may, e.g., be understood as a piece of information or location data indicative of the spatial or geographical position of the transportable asset 120, e.g., in relation to other objects, such as a warehouse or a manufacturing line. By way of example, the location data may be used to find the transportable asset 120 in a complex warehouse, manufacturing plant or factory. In some examples, the location data may be used for inventory or stock purposes, e.g., to keep an overview of the goods and materials that a business holds for the ultimate goal of resale, production or utilization. In further examples, the location data may be used to observe the transportable asset 120 on the move and to supply a timely ordered sequence of location data for further processing, e.g., by one or more of the above-mentioned MOM, MES, ERP and/or SCADA systems. Further, the location of the transportable asset 120 may be stored as a location L-120 of the transportable asset 120 in the data store 108.

A geofence 122 may, e.g., be understood as a virtual perimeter for a real-world geographic area, e.g., the shape or form of the transportable asset 120. By way of example, the geofence 122 may be dynamically generated, e.g., as in a radius around a point location, or match a predefined set of boundaries, such as the transportable asset 120. Herein, the geofence 122 is both movable and defined in relation to the transportable asset 120 so that the reference point in space of the movable geofence 122 may, e.g., be the transportable asset 120 or at least a certain portion or a certain spot of the transportable asset 120. By way of example, the movable geofence 122 may have its spatial center in the spatial center of the transportable asset 120. And hence, the geofence 122 may be movable, e.g., if the transportable asset 120 is moved, e.g. transported. In some sense, the movable geofence 122 may, e.g., be considered to use a moving frame of reference which moves along with the transportable asset 120 contrary to the approach of geopositioning which may yield a set of stationary geographic coordinates, such as latitude and longitude, independent of a potential movement of the transportable asset 120.

In some examples, the application software component 106 and/or the processor 102 may further be configured to activate location tracking of the transportable asset 120 upon entry of a transportation device 124 into the movable geofence 122.

By way of example, the transportation device 124 may be or include a mobile device used to lift and move the transportable asset 120, e.g., over short distances in a warehouse, manufacturing plant or factory. In some examples, the transportation device 124 may be or include a forklift or some other industrial truck. In further examples, the transportation device 124 may be or include an automated guided vehicle (AGV), i.e., a portable robot that follows along marked long lines or wires on the floor, or uses radio waves, vision cameras, magnets, or lasers for navigation. In yet further examples, the transportation device 124 may be or include a stationary device, such a crane or an overhead crane, with a movable lifting component. Herein, a crane may, e.g., be understood as a machine used to move materials both vertically and horizontally, utilizing a system of a boom, hoist, wire ropes or chains, and sheaves for lifting and relocating heavy objects within the swing of its boom. Further, an overhead crane, also called a bridge crane, may, e.g., be understood as a type of crane found in industrial environments and including two parallel rails seated on longitudinal I-beams attached to opposite steel columns by means of brackets. The traveling bridge spans the gap. A hoist, the lifting component of a crane, travels along the bridge. If the bridge is rigidly supported on two or more legs running on two fixed rails at ground level, the crane is called a gantry crane or a goliath crane.

The transportation device 124 may move, e.g., through the warehouse, the manufacturing plant or the factory, wherein in some examples, the location of the transportation device 124 may be tracked during the operation of the transportation device 124 or at least during the movement of the transportation device 124. A tracking of the location of the transportable asset 120 may, e.g., not be necessary or even not be desirable when the transportable asset 120 is not moved or transported. By way of example, the location of the transportable asset 120 may only be tracked after the transportation device 124 has entered the movable geofence 122 of the transportable asset 120. In some examples, for the activation of the tracking of the transportable asset 120, the transportation device 124 needs to be spatially close enough to the transportable asset 120 to be able to transport or move the transportable asset 120. By way of example, for transporting or moving the transportable asset 120, the transportation device 124 needs to enter or penetrate the movable geofence 122 of the transportable asset 120. Then, upon entry of the transportation device 124 into the movable geofence 122, location tracking of the transportable asset 120 may get activated so that the tracking or determination of the location of the transportable asset 120 may be enabled. Conversely, before entry of the transportation device 124 into the movable geofence 122, location tracking of the transportable asset 120 may be inactive so that the tracking or determination of the location of the transportable asset 120 may be disabled. In some examples, if a location of the transportable asset 120 had already been determined prior to the activation of the location tracking of the transportable asset 120 and hence before entry of the transportation device 124 into the movable geofence 122, the previously determined location of the transportable asset 120 may not be updated or changed while the transportation device 124 is outside the movable geofence 122, e.g., until the next activation of the location tracking of the transportable asset 120 and hence until the next entry of the transportation device 124 into the movable geofence 122. In some examples, the location of the transportation device 124 may be tracked in areas in which the respective transportable asset 120 may be situated so that, if the respective transportable asset 120 is expected not to be situated in corridors or hallways (which may be too narrow), the location of the transportation device 124 may, e.g., not be tracked during the operation of the transportation device 124 in such corridors or hallways.

By way of example, the application software component 106 and/or the processor 102 may further be configured to determine a location L-120 of the transportable asset 120 while the transportation device 124 is located inside the movable geofence 122.

The transportable asset 120 may be moved by the transportation device 124, e.g., while the transportation device 124 is located inside the movable geofence 122. As explained above, the movable geofence 122 may be moved along with the transportable asset 120 while the transportable asset 120 is moved by the transportation device 124. Hence, the transportation device 124 may remain inside the movable geofence 122 of the transportable asset 120 while moving the transportable asset 120. Conversely, when transportation device 124 is not located inside the movable geofence 122, the transportable asset 120 may not be moved by the transportation device 124. The location L-120 of the transportable asset 120 may correspond to the above-mentioned location or location data of the transportable asset 120, wherein the location or location data may be indicative of the spatial or geographical position of the transportable asset 120, e.g., in relation to other objects, such as a warehouse or a manufacturing line. Herein, the location L-120 of the transportable asset 120 may be determined while the transportation device 124 is located inside the movable geofence 122, e.g., while the transportation device 124 moves the transportable asset 120.

By way of example, geofencing may be used to support asset tracking, e.g., to track the location L-120 of the transportable asset 120. To enable geofencing, e.g., a given asset, e.g., tractors, trailers, trucks, or containers, the transportation device 124 and/or the transportable asset 120, may be equipped with a transmitter for tracking or locating purposes. Transmitting devices may, e.g., be as simple as a driver's cellphone or incorporated into more sophisticated telematics hardware such as electronic logging devices (ELDs).

Among the advantages of the suggested approach may, e.g., be that mistakes in locating the transportable asset 120 may be reduced or avoided. Such mistakes may occur in other approaches when the locations of the transportation device 124 are mistakenly transferred to the transportable asset 120 which is passed by the transportation device 124. In such other approaches, these mistakes impair the reliability of the overall location or manufacturing system in which such transportation device 124 and asset are used. Hence, the suggested approach offers reliably locating the transportable asset 120, e.g., e.g., in in a warehouse, an industrial manufacturing plant or factory. Reliably locating the transportable asset 120 may, e.g., be supported by activating location tracking of the transportable asset 120 upon entry of a transportation device 124 into the movable geofence 122 and by determining the location L-120 of the transportable asset 120 while the transportation device 124 is located inside the movable geofence 122.

In further examples, the application software component 106 and/or the processor 102 may further be configured to track the location L-124 of the transportation device 124 at least while the transportation device 124 is located inside the movable geofence 122.

To locate the transportation device 124, the transportation device 124 may be equipped with a transmitter for location or tracking purposes, wherein some examples of such transmitters are mentioned above. In some examples, the tracking of the location of the transportation device 124 may always be active or at least be active when the transportation device 124 is operated. In other examples, the tracking of the location L-124 of the transportation device 124 may only be active when the transportation device 124 is inside the movable geofence 122 of the transportable asset 120. By way of example, the tracking of the location L-124 of the transportation device 124 may be activated manually by a driver or an operator of the transportation device 124, e.g., when approaching or loading the transportable asset 120 for transportation purposes. In further examples, the tracking of the location L-124 of the transportation device 124 may, e.g., be activated automatically when the transportation device 124 gets or is prepared for transportation of the transportable asset 120, e.g., when the fork of a forklift is put in a position to (start to) carry the transportable asset 120.

In some examples, the tracking of the location L-124 of the transportation device 124 may only be active when the transportation device 124 is inside the movable geofence 122 or at least when the transportation device 124 gets or is prepared for transportation of the transportable asset 120. Such an approach of selective tracking of the location L-124 of the transportation device 124 may be beneficial, e.g., when the transportation device 124 may be operated in an environment with 5G communication, wherein 5G is the fifth-generation technology standard for cellular networks: mutual disturbance or interference of the 5G communication with the tracking of the location L-124 of the transportation device 124 may avoided or at least reduced, especially if the tracking of the location L-124 of the transportation device 124 involves RTL systems.

By way of example, the application software component 106 and/or the processor 102 may further be configured to assigning the location L-124 of the transportation device 124 to the transportable asset 120 as the location L-120 of the transportable asset 120 while the transportation device 124 is located inside the movable geofence 122. In some examples, the location L-120 of the transportable asset 120 may be adjusted by a distance 140 between the transportable asset 120 and the transportation device 124.

In some examples, while the transportation device 124 is located inside the movable geofence 122 of the transportable asset 120, the location L-120 of the transportable asset 120 may be determined to be equal to the location L-124 of the transportation device 124. In such examples, the determined location L-124 of the transportation device 124 may, e.g., be handed over or inherited from the transportation device 124 to the transportable asset 120 while the transportation device 124 is located inside the movable geofence 122 of the transportable asset 120. In further examples, e.g., if the transportable asset 120 and/or the transportation device 124 is/are comparably large, there may be a certain distance 140 between the transportable asset 120 and the transportation device 124 also while the transportation device 124 is inside the movable geofence 122 of the transportable asset 120. By way of example, the transportation device 124 may be equipped with a transmitter for location or tracking purposes, wherein this transmitter may be mounted on the roof or an upper part of the transportation device 124 for enabling reliably locating the transportation device 124. In such examples, the location L-120 of the transportable asset 120 may be adjusted by the distance 140 to avoid un unprecise location L-120 of the transportable asset 120, wherein the distance may, e.g., correspond to the distance between the position of the mentioned transmitter of the transportation device 124 and the position of the transportable asset 120 when it is transported by the transportable asset 120, e.g., the fork of the forklift if the transportation device 124 is a forklift.

Hence, the location L-124 of the transportation device 124 which may be obtained as explained above may be assigned (optionally including an adjustment for the distance 140) to the transportable asset 120 while the transportation device 124 is located inside the movable geofence 122 of the transportable asset 120. Accordingly, a concept of indirect locating may be applied which may contribute to reduce or avoid erroneous locations of the transportable asset 120 and which may further bring down the costs of locating the transportable asset 120.

According to this indirect locating aspect, instead of tracking the transportable asset 120 directly, e.g., by putting an active transponder of an RTL system on the transportable asset 120, e.g., the transportation device 124 that moves the transportable asset 120 may be tracked with a locating system 118. E.g., as long as the transportable asset 120 is being transported, the positions or locations L-124 of the transportation device 124 may be transferred to the transportable asset 120 automatically and therefore the transportable asset 120 may be tracked indirectly through the transportation device 124. This kind of logic may, e.g., be set in an application software, such as the application software component 106, that works with the position or location information of the RTL system 118. It Is, however, also possible that the application software and the software that calculates and provides the locations of the RTL system 118 is one and the same.

By way of example, the application software component 106 and/or the processor 102 may further be configured to deactivate location tracking of the transportable asset 120 upon exit of the transportation device 124 from the movable geofence 122.

E.g., after a transportable asset 120 has been moved by the transportation device 124 and when the transportation device 124 leaves the movable geofence 122 of the movable asset 120, the location tracking of the transportable asset 120 may be deactivated. Herein, in some examples, the deactivation of the location tracking of the transportable asset 120 may mean that the location L-120 of the transportable asset 120 may not be updated or changed after the exit of the transportation device 124 from the movable geofence 122 of the transportable asset 120 - at least until the transportation device 124 enters again into the movable geofence 122 of the transportable asset 120.

The described deactivation of the location tracking of the transportable asset 120 may, e.g., contribute to avoid mistakenly assign the location L-124 of the transportation device 124 which passes the transportable asset 120 without transporting transportable asset 120. Further, in some examples, selectively deactivating the location tracking of the transportable asset 120 may contribute to reduce the consumption of involved resources, e.g., of the locating system 118 or of the tracking transponders, e.g., in terms of required memory, computation or energy storage resources.

By way of example, the application software component 106 and/or the processor 102 may further be configured to assign an initial location LI-120 to the transportable asset 120 before the first activation of the location tracking of the transportable asset 120.

The initial location LI-120 which may be assigned to the transportable asset 120 may, e.g., be used for calibration purposes or to set a reference location point to the transportable asset 120. In some examples, location tracking of the transportable asset 120 may only track relative changes to the location L-120 of the transportable asset 120 so that the initial location LI-120 may be required to derive an absolute location L-120 of the transportable asset 120. In some examples, the initial location LI-120 may be assigned to the transportable asset 120 upon the first activation of the location tracking of the transportable asset 120.

In some examples, an initial location LI-124 may be assigned to the transportation device 124 before or upon the first activation of the location tracking of the transportation device 124.

Further, the initial location LI-120 or L-124 of the transportable asset 120 or the transportation device 124, respectively, may, by way of example, be updated periodically or upon occurrence of a given event, such as an interruption of the power supply of transportation device 124 or the locating system 118, or changes made to the warehouse, manufacturing plant or factory in which the transportation device 124 is operated and which affect the location functionalities of the transportable asset 120 or the transportation device 124, e.g., by moving manufacturing lines or storage areas to other locations.

By way of example, the transportation device 124 is equipped with at least one real-time locating (RTL) component 126 and with at least one reader 128 of an identification system, wherein the transportable asset 120 is equipped with at least one identifier tag 132 readable by the respective reader 128, and wherein the application software component 106 and/or the processor 102 may further be configured to track the location L-124 of the transportation device 124 using the respective RTL component 126 of the transportation device 124; and to identify the transportable asset 120 using the respective identifier tag 132 and the respective reader 128.

By way of example, the RTL component 126 may include a tracking transponder, a light detection and ranging (LiDAR) or other optical sensor or camera, an ultra-wide band (UWB) tracking component, a Bluetooth low energy (BLE) beacon, WLAN transponder, etc. In further examples, the RTL component 126 may include a location engine which may involve a software application which may determine the location L-124 of the transportation device 124 using the time that, e.g., a radio signal needs to propagate to a known location and back to the transportation device 124. Such a location engine may, e.g., be used to track or locate AGV's.

In some examples, the locating system 118 may include further equipment, such as one or more additional RTL component(s) 134, which may support tracking the location L-124 of the transportation device 124. Such additional RTL components 134 may, e.g., include spatially fix components, e.g., radio base stations, optical cameras or optical sensors, or movable components, e.g., other transportation devices, such as AGV's or forklifts, etc.

The reader 128 may, e.g., include a laser scanner or a camera which may be suitable to read the respective identifier tag 132 of the transportable asset 120, which may, e.g., include a bar code or QR code, i.e., a quick-response code that is a type of two-dimensional matrix barcode. In further examples, the identification of the transportable asset 120 may be done with radiofrequency identification (RFID) that uses electromagnetic fields to automatically identify and track tags attached to objects. Herein, the respective identifier tag 132 may, e.g., include a radio transponder which is sometimes called RFID tag, and the reader 128 may, e.g., include an RFID receiver and optionally an RFID transmitter. By way of example, when triggered by an electromagnetic interrogation pulse from the reader 128, the identifier tag 132 may transmit digital data, such as an identifying inventory number, back to the reader 128.

The corresponding identification system may, e.g., include the reader 128 and an application software to identify the transportable asset 120 by comparing the information read by the reader 128 from the respective identifier tag 132 with information, such as an identifying inventory number, available in a data store. Herein, the application software and the data store used for identification of the transportable asset 120 may, e.g., be separate or may be included or correspond to the application software component 106 and the data store 108 of the RTL system 118 as, respectively.

The transportable asset 120 may, e.g., be equipped with one or more identifier tag 132. Two identifier tags 132 may, e.g., be used if the transportable asset 120 may be loaded by the transportation device 124 in two directions, such as a pallet which may be loaded by a forklift from the one direction or from the opposite direction. Then the two identifier tags 132 may be arranged on the transportable asset 120 such that at least one of them may be read when the transportable asset 120 is transported by the transportation device 124, e.g., when or after transportation device 124 enters the movable geofence 122 of the transportable asset 120. Three and more identifier tags 132 may, e.g., be used if the transportable asset 120 is bulky to ensure reliable reading of at least one of the identifier tags 132 when or after transportation device 124 enters the movable geofence 122 of the transportable asset 120, e.g., when the range of the reader 128 to read the respective identifier tag 132 may be limited or disturbed by the size or the spatial form of the transportable asset 120.

By way of example, the above-mentioned concept of indirect locating may be enhanced by contributing to understand which transportable asset 120 is being transported. This may, e.g., be solved by using an RFID system. The transportable assets 120 may be equipped with passive and cheap RFID labels as the respective identifier tag 132, and an RFID reader 128 may be placed, e.g., on top of the transportation devices 124. The moment the transportation starts, e.g., by loading the transportable asset 120 on the transportation device 124, the RFID reader 128 may read the label or tag 132 of the transportable asset 120. In some examples, the location L-124 of the transportation device 124 may be transferred to the transportable asset 120 being transported to obtain the location L-120 of the transportable asset 120.

It should be appreciated that according to other approaches, a technical challenge of using RFID in the context of indirect locating may be problematic: During empty tours of the transportation device 124, it may be possible that the RFID reader 128 reads labels or tags 132 along the way when passing these tags 132. The undesired result would be that the locations of the transportation device 124 would be mistakenly transferred as location L-120 to the transportable asset 120 passed and the reliability of the overall system would be impaired. This challenge may, however, be met, e.g., thanks to the suggested activation of the location tracking of the transportable asset 120 upon entry of the transportation device 124 into the movable geofence 122 of the transportable asset 120 and optionally thanks to the suggested deactivating location tracking of the transportable asset 120 upon exit of the transportation device 124 from the movable geofence 122 of the transportable asset 120.

By way of example, the application software component 106 and/or the processor 102 may further be configured to activate the respective reader 128 upon entry of the transportation device 124 into the movable geofence 122.

Accordingly, the respective reader 128 may, e.g., only be able to read the respective identifier tag 132 and to identify the corresponding, transportable asset 120 after the transportation device 124 has entered the movable geofence 122 of the transportable asset 120. Conversely, in some examples, the respective reader 128 may not yet be able to read the respective identifier tag 132 and to identify the corresponding, transportable asset 120 before the transportation device 124 has entered the movable geofence 122 of the transportable asset 120.

Activating the respective reader 128 upon entry of the transportation device 124 into the movable geofence 122 of the transportable asset 120 may, e.g., contribute to reduce the energy consumption of the respective reader 128. In some examples, the reduction of the energy consumption may extend the availability of the transportation device 124 by avoiding or delaying interruptions for, e.g., recharging a battery of the transportation device 124 which provides the energy to operate the transportation device 124. Further, the activation of the respective reader 128 upon entry of the transportation device 124 into the movable geofence 122 of the transportable asset 120 may, e.g., contribute to avoid a mistakenly assign the location L-124 of the transportation device 124 which passes the transportable asset 120 without transporting transportable asset 120. This may be achieved, e.g., since no transportable asset 120 may be identified before the transportation device 124 enters the movable geofence 122 of the transportable asset 120 so that there is no corresponding location L-120 to which the location L-124 of the transportation device 124 may be assigned. Further, the described activation of the respective reader 128 may contribute to reduce the consumption of involved resources, e.g., of the locating system 118 or of the tracking transponders, e.g., in terms of required memory, computation or energy storage resources.

In some examples, the described activation of the respective reader 128 upon entry of the transportation device 124 into the movable geofence 122 of the transportable asset 120 may contribute to equip the locating system 118 with less RTL components 126, 134 compared to other approaches. Hence, the described activation of the respective reader 128 may contribute to reduce the costs of reliably locating the transportable asset 120 compared to other approaches especially with respect to the cost of the location or RTL infrastructure.

By way of example, the application software component 106 and/or the processor 102 may further be configured to deactivate the respective reader 128 upon exit of the transportation device 124 from the movable geofence 122 of the transportable asset 120.

E.g., after a transportable asset 120 has been moved by the transportation device 124 and when the transportation device 124 leaves the movable geofence 122 of the movable asset 120, the respective reader 128 may be deactivated. The described deactivation of the respective reader 128 may, e.g., contribute to avoid assign a wrong location to the transportable asset 120, e.g., the location L-124 of the transportation device 124 which passes the transportable asset 120 without transporting the transportable asset 120. Further, in some examples, selectively deactivating the respective reader 128 may contribute to reduce the consumption of involved resources, e.g., of the locating system 118 or of the tracking transponders, e.g., in terms of required memory, computation or energy storage resources.

By way of example, the application software component 106 and/or the processor 102 may further be configured to track the location L-124 of the transportation device 124 further using at least one additional RTL component 134, wherein the respective additional RTL component 134 includes a stationary base station 134A and/or a mobile device 134B.

The respective additional RTL component 134 may, e.g., include an RTL tracking component which enables tracking of the location of the respective additional RTL component 134.

The stationary base station 134A may, e.g., be installed at a fixed position, e.g. in a complex warehouse, an industrial manufacturing plant or a factory, and may e.g., include one or more edge devices, Wi-Fi (wireless local area network) hotspots, IMSI (international mobile subscriber identity) catchers, wherein an IMSI catcher may generally be a signal receiver, sometimes called anchor, for receiving signals from the RTL component 126 of the transportation device 124. In some examples, the stationary base station 134A may include one or more cameras, lasers, or other optical devices.

In further examples, the mobile device 134B may include one or more other transportation devices, forklifts, AGV's or other mobile edge devices.

By way of example, the spatial form of the geofence 122 may correspond to the spatial form of the transportable asset 120 within preconfigurable, acceptable discrepancies.

By way of example, the transportable asset 120 may have the form of a rectangular cuboid, a cylinder or a sphere, wherein the geofence 122 may then have a corresponding spatial form, i.e., a rectangular cuboid, a cylinder or a sphere. In further examples, the transportable assets may have the spatial form which is composed of two or more basic geometric forms, wherein, in some examples, the geofence 122 may have a corresponding, composed spatial form. Especially for composed spatial forms, a complete correspondence or congruence of the spatial form of the geofence 122 with the spatial form of the transportable asset 120 may not be feasible so that acceptable discrepancies may be pre-configured, e.g., so that the start and the end of the transportation of the transportable asset 120 by the transportation device 124 may still be detected with the corresponding geofence 122 which may not completely be congruent with the spatial form of the transportable asset 120.

By way of example, the transportable asset 120 may include a container 136 for transporting contained assets 138, wherein the contained assets 138 include individual assets, bulk assets, liquid assets or gaseous assets, wherein the application software component 106 and/or the processor 102 may further be configured to assign the location L-120 of the transportable asset 120 to the respective contained asset 138.

The container 136 may, e.g., be or include a shipping container, a box, a crate, a vessel, such as barrels, cans, drums, tubs or tanks. Some examples of the individual assets may include screws, nails, or any other individually countable or individually identifiable assets. In further examples, the individual assets may include bulk cargo, i.e., material in gas, liquid or granular, particulate (as a mass of relatively small solids) form, such as petroleum/crude oil, grain, coal, or gravel.

By way of example, assigning the location L-120 of the transportable asset 120 to the respective contained asset 138 may be done by logically linking the transportable asset 120 and optionally its location L-120 with the respective contained asset 138 and optionally its location. In some examples, the transportable asset 120 and the contained assets 138 may be arranged or modeled in a hierarchy, wherein the transportable asset 120 is in a higher hierarchy level than the contained assets 138. Hence, the transportable asset 120 and optionally its location L-120 may be logically linked with the contained assets 138 which is arranged in the hierarchy below the transportable asset 120.

In further examples, an event may be generated in a MES or ERP system upon entry of the transportation device 124 into the movable geofence 122, wherein the MES or ERP system is communicatively connected with the locating system 118. Further, another event may be generated in the MES or ERP system upon exit of the transportation device 124 from the movable geofence 122. The corresponding event may, e.g., be used to update manufacturing data in the MES and, e.g., contribute to optimize the manufacturing process and manufacturing output.

By way of example, the transportation device 124 for transporting a transportable asset 120 may be equipped with at least one real-time locating (RTL) component 126 and with at least one reader 128 of an identification system, wherein the respective reader 128 may be arranged and configured to be activated upon entry of the transportation device 124 into a movable geofence 122 which is defined in relation to the transportable asset 120. The explained activation of the respective reader 128 may, e.g., be triggered by the RTL system or a software application of the locating system.

In further examples, the locating system 118 may be arranged and configured to execute the steps of the suggested computer-implemented method. By way of example, the locating system 118 may include at least one transportation device 124 and at least one identifier tag 132 with which a transportable asset 120 is equipped, wherein the transportation device 124 is equipped with at least one real-time locating (RTL) component 134 and with at least one reader 128 of an identification system, and wherein the transportable asset 120 is equipped with at least one identifier tag 132 readable by the respective reader 128.

It should be appreciated that the described the application software component 106 and/or the processor 102 may carry out an analogous method of locating a transportable asset 120.

Further, a computer-readable medium 160 which may include a computer program product 162 is depicted in Fig. 1, wherein the computer program product 162 may be encoded with executable instructions, that when executed, cause the computer system 100 or and/or the locating system 118 to carry out the described method. In Fig. 1, the movable geofence 122 which may be stored in the internal data store 108 is highlighted with a dashed line when the transportation device 124 enters and optionally stays inside the movable geofence 122 of the transportable asset 120. Accordingly, also the location L-120 of the transportable asset 120 which may also be stored in the internal data store 108 is highlighted with the dashed line when the transportation device 124 enters and optionally stays inside the movable geofence 122 of the transportable asset 120. Further, as depicted in Fig. 1, the determined location L-120 of the transportable asset 120 may optionally be displayed in the location UI 116.

The suggested approach may, e.g., contribute to avoid that the location L-124 of the transportation device 124 may mistakenly be transferred to the transportable asset 120 passed and the reliability of the overall system would be impaired. Some aspects of the concept of indirect locating may be applied according to the suggested approach to bring down the costs. Indirect locating may be understood as a locating strategy where instead of tracking a transportable asset 120 directly, e.g., by putting an active transponder 126 of the RTL system 118 on the transportable asset 120, the transportation device 124 that moves the transportable asset 120 is tracked with the locating system 118. As long as the transportable asset 120 is being transported, the locations of the transportation device 124 may be transferred to the transportable asset 120 automatically and therefore the transportable asset 120 may be tracked indirectly through the transportation device 124. This kind of logic is typically set in an application software that works with the location information of the RTL system 118. It Is, however, also possible that the application software and the software that calculates and provides the locations of the RTL system 118 is one and the same.

To enhance the concept of indirect locating understanding what transportable asset 120 is being transported may be beneficial. This may, e.g., be solved by using an RFID system. The transportable assets 120 may be equipped with passive and cheap RFID labels 132, and an RFID reader 128 may be placed on top of the transportation devices 124. The moment the transportation starts, e.g., by loading the transportable asset 120 on the transportation device 124, the RFID reader 128 may read the label of the transportable asset 120, and the locations of the transportation devices 124 may be transferred to the transportable asset 120 being transported.

There is, however, one technical challenge if RFID is used for indirect locating. During empty tours of the transportation devices 124, it is possible that the RFID reader 128 reads labels 132 along the way when passing them. The result may be that the locations of the transportation devices 124 would be mistakenly transferred to the transportable asset 120 passed and the reliability of the overall system would be impaired. This challenge may be met, e.g., with selectively activating and optionally deactivating the location tracking of the transportable asset 120 upon entry of a transportation device 124 into the movable geofence 122 of the transportable asset 120. Further, selectively activating and optionally deactivating the respective reader 128 upon entry of a transportation device 124 into the movable geofence 122 of the transportable asset 120 may contribute to meet this challenge.

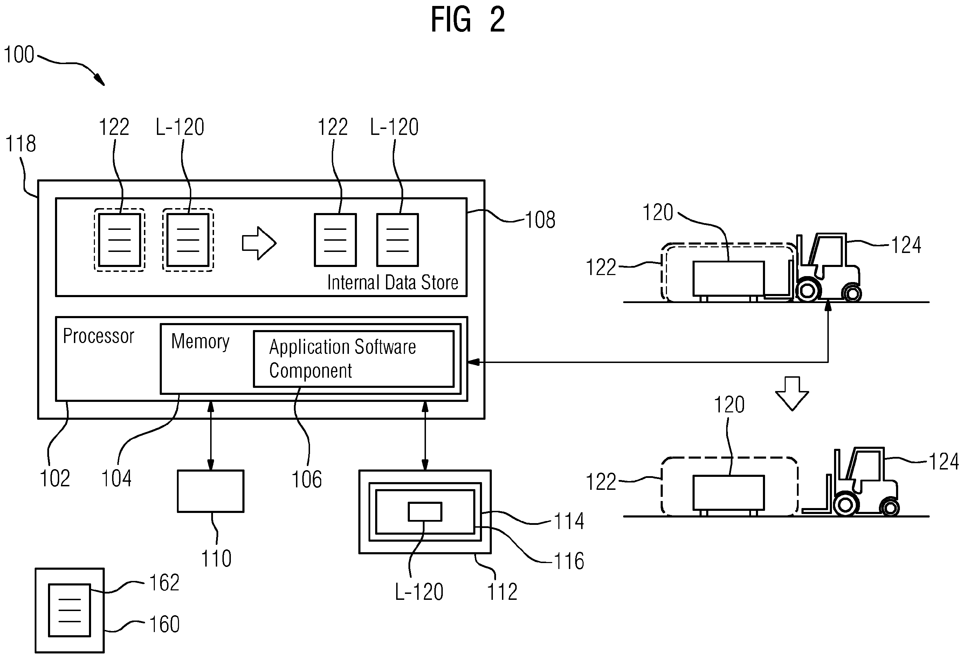

With reference to Fig. 2, a functional block diagram of a second example computer system or data processing system 100 is depicted that facilitates locating a transportable asset 120 in a product system.

While the transportation device 124 is still inside the movable geofence 122 of the transportable asset 120, the location L-120 of the transportable asset may still be updated, e.g., such that the location L-124 of the transportation device may be assigned to the transportable asset 120. This status is indicated with the dashed lines to highlight the movable geofence 122 and the location L-120 of the transportable asset 120 which are stored in the internal data store 108. Upon exit of the transportation device 124 from the movable geofence 120 of the transportable asset 120, the location tracking of the transportable asset 120 may get deactivated, so that e.g., the location L-120 of the transportable asset 120 may not be updated or changed after the exit of the transportation device 124 from the movable geofence 122 of the transportable asset 120 - at least until the transportation device 124 enters again into the movable geofence 122 of the transportable asset 120. Hence, the movable geofence 122 and the location L-120 of the transportable asset 120 stored in the internal data store 108 are not highlighted by dashed lines anymore.

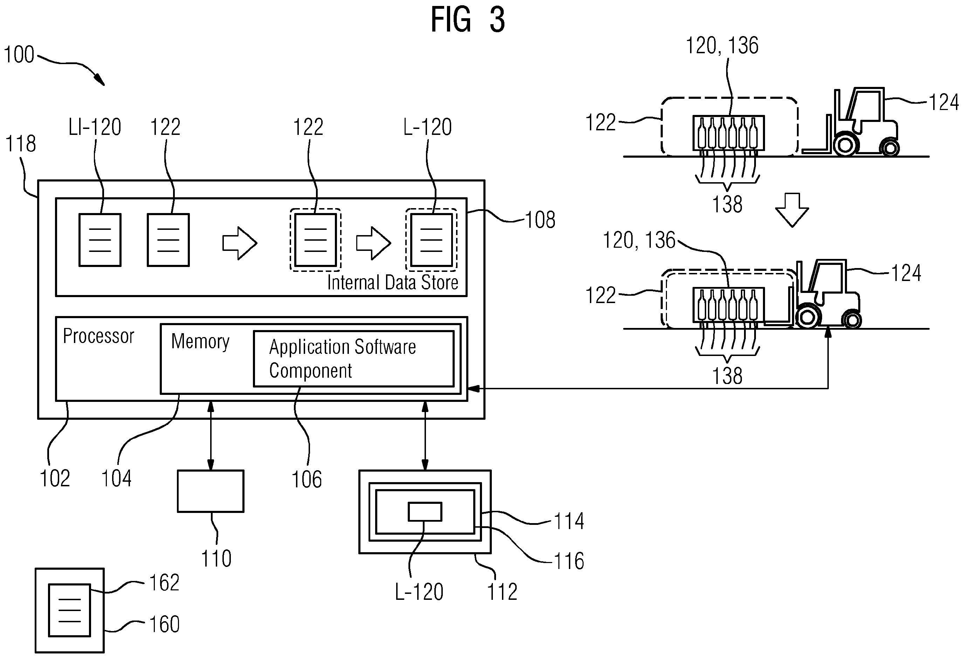

With reference to Fig. 3, a functional block diagram of a third example computer system or data processing system 100 is depicted that facilitates locating a transportable asset 120 in a product system.

The third example is several similarities with the second example, wherein the transportable asset 120 according to the third example includes a container 136, such as a box, for transporting contained assets 138 which may, e.g., be bottles or other shipping containers mentioned above. The location L-120 of the transportable asset 120 may be assigned to the respective contained asset 138.

Further, an initial location LI-120 may be assigned to the transportable asset 120 before the first activation of the location tracking of the transportable asset 120, e.g., for calibration purposes or to set a reference location point to the transportable asset 120.

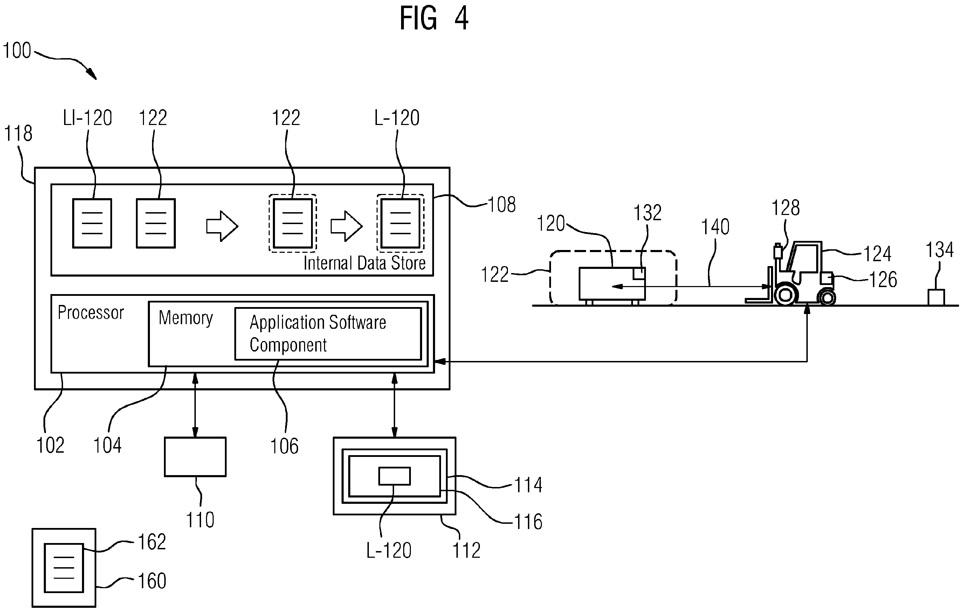

With reference to Fig. 4, a functional block diagram of a fourth example computer system or data processing system 100 is depicted that facilitates locating a transportable asset 120 in a product system.

According to the fourth example, the transportation device 124 is equipped with a real-time locating (RTL) component 126 and with a reader 128 of an identification system. The transportable asset 120 is equipped with an identifier tag 132 which is readable by the reader 128 of the transportation device 124.

The location L-124 of the transportation device 124 is tracked using the RTL component 126 of the transportation device 124. The transportable asset 120 is identified using the identifier tag 132 and the reader 128.

The location L-124 of the transportation device 124 may be assigned to the transportable asset 120 as the location L-120 of the transportable asset 120 while the transportation device 124 is located inside the movable geofence 122, wherein in some examples, the location L-120 of the transportable asset 120 may be adjusted by a distance 140 between the transportable asset 120 and the transportation device 124.

In some examples, the respective reader 128 may be activated upon entry of the transportation device 124 into the movable geofence 122, and optionally the respective reader 128 may be deactivated upon exit of the transportation device 124 from the movable geofence 122.

Further, an initial location LI-124 may be assigned to the transportation device 124 before or upon the first activation of the location tracking of the transportation device 124.

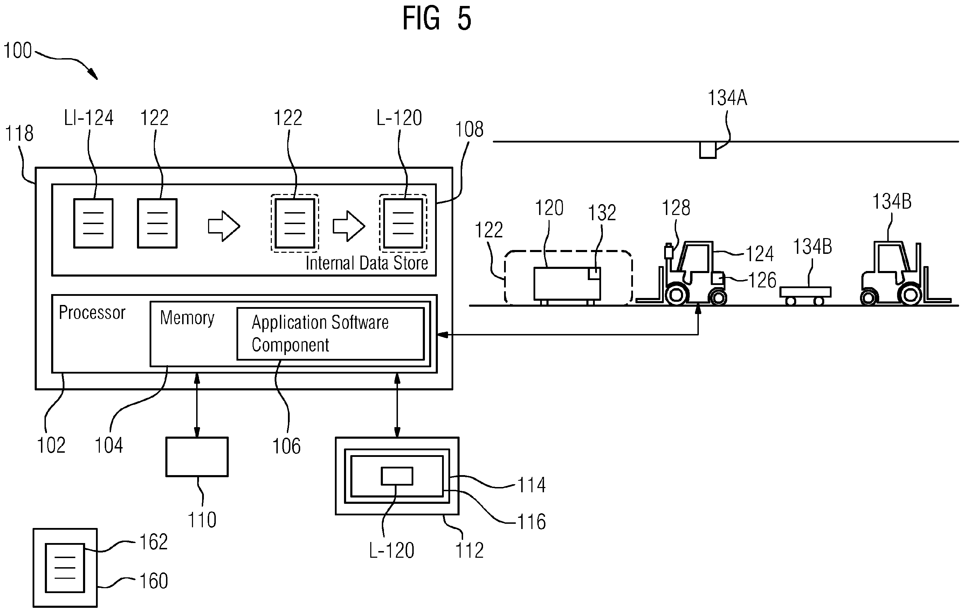

With reference to Fig. 5, a functional block diagram of a fifth example computer system or data processing system 100 is depicted that facilitates locating a transportable asset 120 in a product system.

According to the fifth example, the locating system 118 further includes three additional RTL components 134 which each include an RTL tracking component enabling tracking of the location of the respective additional RTL component 134. The three additional RTL components 134 include a stationary base station 134A and two mobile devices 134B. The stationary base station 134A is installed at a fixed position, e.g., under the ceiling of a complex warehouse, an industrial manufacturing plant or a factory and may, e.g., be a Wi-Fi hotspot. The two mobile devices 134B include an AGV 134B and another forklift 134B.

By way of example, the application software component 106 and/or the processor 102 may further be configured to track the location L-124 of the transportation device 124 further using at least one additional RTL component 134, wherein the respective additional RTL component 134 includes a stationary base station 134A and/or a mobile device 134B.

The stationary base station 134A may, e.g., be installed at a fixed position, e.g. in a complex warehouse, an industrial manufacturing plant or a factory, and may e.g., include one or more edge devices, Wi-Fi (wireless local area network) hotspots, IMSI (international mobile subscriber identity) catchers, wherein an IMSI catcher may generally be a signal receiver, sometimes called anchor, for receiving signals from the RTL component 126 of the transportation device 124. In some examples, the stationary base station 134A may include one or more cameras, lasers, or other optical devices.

In further examples, the mobile device 134B may include one or more other transportation devices, forklifts, AGV's or other mobile edge devices.

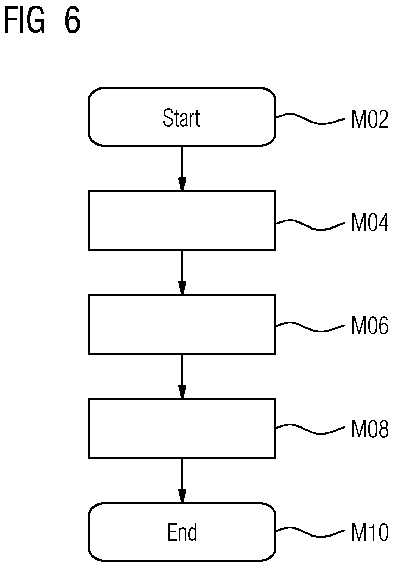

Fig. 6 depicts a flow diagram of an example methodology that facilitates locating a transportable asset in a product system. The method for locating a transportable asset may start at M02, and the methodology may include several acts carried out through operation of at least one processor.

These acts may include an act M04 of providing a movable geofence which is defined in relation to the transportable asset; an act M06 of activating location tracking of the transportable asset upon entry of a transportation device into the movable geofence; and an act M08 of determining a location of the transportable asset while the transportation device is located inside the movable geofence. At M10 the methodology may end.

It should further be appreciated that the methodology M may include other acts and features discussed previously with respect to the computer-implemented method of locating a transportable asset.

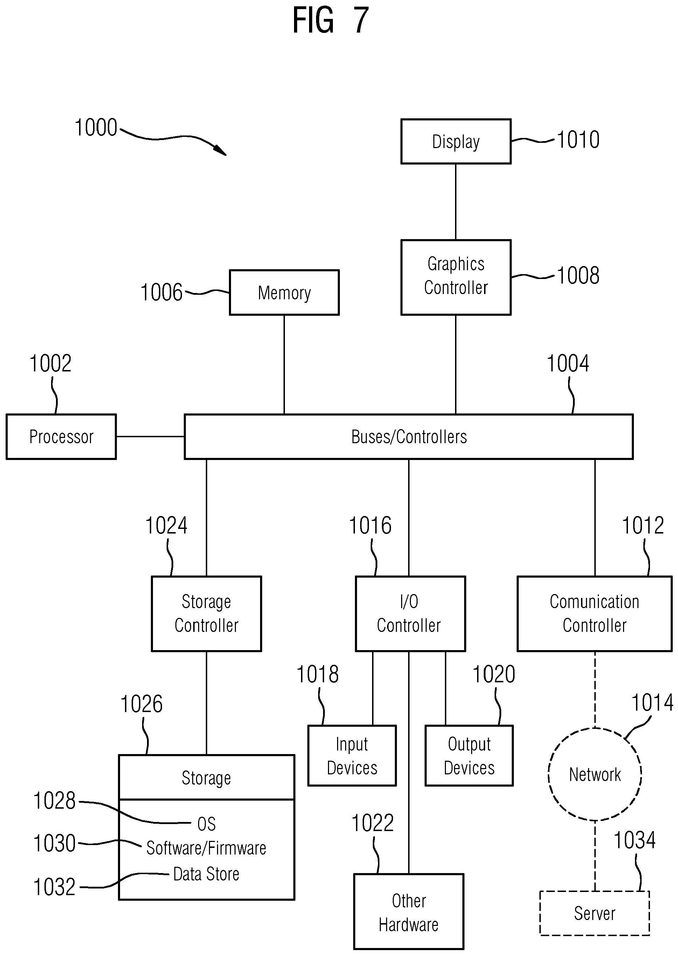

Fig. 7 depicts a block diagram of a data processing system 1000 (also referred to as a computer system) in which an embodiment can be implemented, for example, as a portion of a product system, and/or other system operatively configured by software or otherwise to perform the processes as described herein, e.g., as an embodiment of the above-mentioned chatbot. The data processing system 1000 may comprise, for example, the computer or IT system or data processing system 100 mentioned above. The data processing system depicted comprises at least one processor 1002 (e.g., a CPU) that may be connected to one or more bridges/controllers/buses 1004 (e.g., a north bridge, a south bridge). One of the buses 1004, for example, may comprise one or more I/O buses such as a PCI Express bus. Also connected to various buses in the depicted example may comprise a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures comprise IA-32, x86-64, and ARM processor architectures.

Other peripherals connected to one or more buses may comprise communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may comprise one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) comprising input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that comprises a touch screen that serves as both an input and display device. Further, it should be appreciated that some input devices (such as a laptop) may comprise a plurality of different types of input devices (e.g., touch screen, touch pad, keyboard). Also, it should be appreciated that other peripheral hardware 1022 connected to the I/O controllers 1016 may comprise any type of device, machine, or component that is configured to communicate with a data processing system.

Additional components connected to various busses may comprise one or more storage controllers 1024 (e.g., SATA). A storage controller may be connected to a storage device 1026 such as one or more storage drives and/or any associated removable media, which can be any suitable non-transitory machine usable or machine-readable storage medium. Examples comprise nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may comprise an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may comprise Microsoft Windows, Linux, UNIX, iOS, and Android operating systems. Also, examples of data stores comprise data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, comprising the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system, or part thereof that controls at least one operation, whether such a device is implemented in hardware, firmware, software, or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures comprise VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be comprised in a client device that communicates with the server (and/or a virtual machine executing on the server) through a wired or wireless network (which may comprise the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols comprise Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "comprise" and "comprise," as well as derivatives thereof, mean inclusion without limitation. The singular forms "a", "an" and "the" are intended to comprise the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to comprise, be comprised within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

## Claims

1. Computer-implemented method for locating a transportable asset (120), the method including:
• providing a movable geofence (122) which is defined in relation to the transportable asset (120);
• activating location tracking of the transportable asset (120) upon entry of a transportation device (124) into the movable geofence (122); and
• determining a location (L-120) of the transportable asset (120) while the transportation device (124) is located inside the movable geofence (122).

2. Computer-implemented method according to claim 1, further including:
• tracking a location (L-124) of the transportation device (124) at least while the transportation device (124) is located inside the movable geofence (122).

3. Computer-implemented method according to claim 2, further including:
• assigning the location (L-124) of the transportation device (124) to the transportable asset (120) as the location (L-120) of the transportable asset (120) while the transportation device (124) is located inside the movable geofence (122) of the transportable asset (120), wherein optionally the location (L-120) of the transportable asset (120) is adjusted by a distance (140) between the transportable asset (120) and the transportation device (124).

4. Computer-implemented method according to any one of the preceding claims, further including:
• deactivating location tracking of the transportable asset (120) upon exit of the transportation device (124) from the movable geofence (122).

5. Computer-implemented method according to any one of the preceding claims, further including:
• assigning an initial location (LI-120) to the transportable asset (120) before the first activation of the location tracking of the transportable asset (120).

6. Computer-implemented method according to any one of the preceding claims,
wherein the transportation device (124) is equipped with at least one real-time locating (RTL) component (126) and with at least one reader (128) of an identification system,
wherein the transportable asset (120) is equipped with at least one identifier tag (132) readable by the respective reader (128), and
wherein the method further includes:
• tracking the location (L-124) of the transportation device (124) using the respective RTL component (126) of the transportation device (124); and
• identifying the transportable asset (120) using the respective identifier tag (132) and the respective reader (128).

7. Computer-implemented method according to claim 6, further including:
• activating the respective reader (128) upon entry of the transportation device (124) into the movable geofence (122).

8. Computer-implemented method according to claim 6 or 7, further including:
• deactivating the respective reader (128) upon exit of the transportation device (124) from the movable geofence (122).

9. Computer-implemented method according to any of the claims 6 to 8, further including:
• tracking the location (L-124) of the transportation device (124) further using at least one additional RTL component (134),
wherein the respective additional RTL component (134) includes a stationary base station (134A) and/or a mobile device (134B).

10. Computer-implemented method according to any one of the preceding claims,
wherein the spatial form of the geofence (122) corresponds to the spatial form of the transportable asset (120) within preconfigurable, acceptable discrepancies.

11. Computer-implemented method according to any one of the preceding claims,
wherein the transportable asset (120) includes a container (136) for transporting contained assets (138), wherein the contained assets (138) include individual assets, bulk assets, liquid assets or gaseous assets,
wherein the method further includes:
• assigning the location (L-120) of the transportable asset (120) to the respective contained asset (138).

12. Transportation device (124) for transporting a transportable asset (120),
wherein the transportation device (124) is equipped with at least one real-time locating (RTL) component (126) and with at least one reader (128) of an identification system, and
wherein the respective reader (128) is arranged and configured to be activated upon entry of the transportation device (124) into a movable geofence (122) which is defined in relation to the transportable asset (120).

13. Locating system (118) arranged and configured to execute the steps of the computer-implemented method according to any one of the claims 1 to 11.

14. Computer program product (162), including computer program code which, when executed by a locating system (118), cause the locating system (118) to carry out the method according to any one of the claims 1 to 11.

15. Computer-readable medium (160) including a computer program product (162) including computer program code which, when executed by a locating system (118), cause the locating system (118) to carry out the method of one of the claims 1 to 11.
